(19) Europäisches Patentamt
European Patent Office
Office européen des brevets

(11) EP 2 679 437 A1

(12) **EUROPEAN PATENT APPLICATION**

(43) Date of publication:
**01.01.2014 Bulletin 2014/01**

(21) Application number: **13169136.2**

(22) Date of filing: **24.05.2013**

(51) Int Cl.:
***B60L 11/18*** *(2006.01)* ***H01M 10/44*** *(2006.01)*
***H01M 10/48*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.06.2012 CN 201210223441**
**12.07.2012 US 201213547476**

(71) Applicant: **O2 Micro, Inc.**
**Santa Clara, CA 95054 (US)**

(72) Inventor: **Guan, Qiang**
**201203 Shanghai (CN)**

(74) Representative: **Lippert, Stachow & Partner**
**Patentanwälte**
**Postfach 30 02 08**
**51412 Bergisch Gladbach (DE)**

(54) **Method and system for regulating battery operation**

(57) Method, system, and programs for regulating battery operation. A signal indicative of an atmospheric pressure outside a battery is first obtained. Based on the obtained signal, one or more parameters to be used for controlling an operation of the battery are then determined. Eventually, the operation of the battery is adjusted based on the determined one or more parameters.

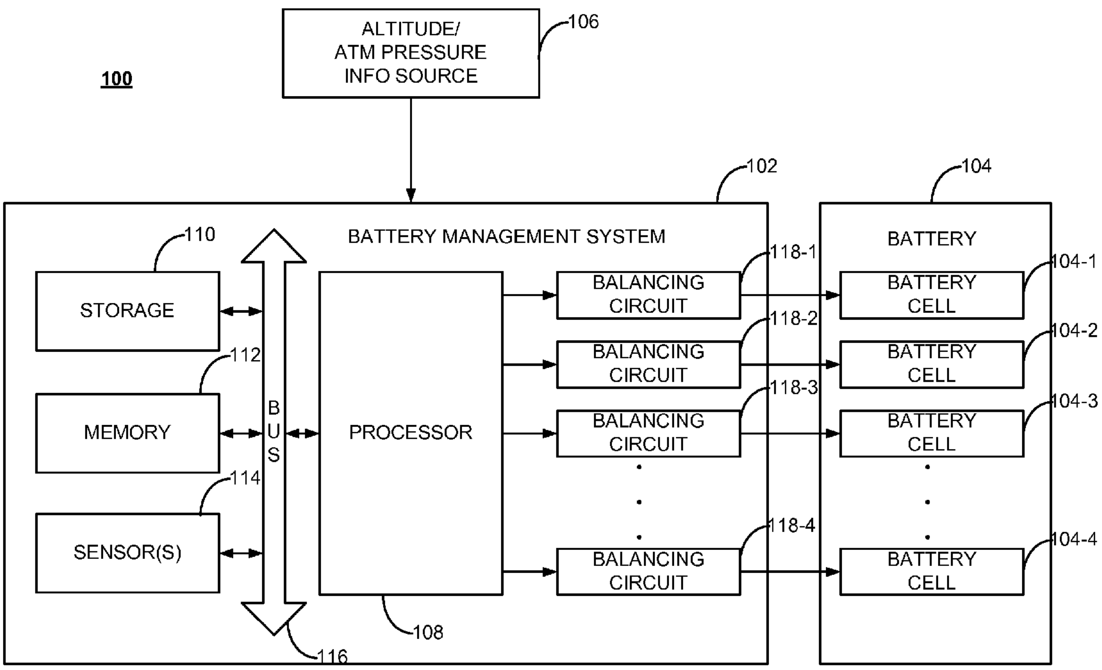


**FIG. 1**

EP 2 679 437 A1

**Description**

CROSS-REFERENCE TO RELATED APPLICATIONS

The present application claims the benefit of priority to Chinese Patent Application Serial No. 201210223441.9 filed June 29, 2012, which is incorporated herein by reference in its entirety.

BACKGROUND

The disclosure relates generally to a method and system for regulating battery operation.

Rechargeable batteries (secondary batteries), such as lead-acid batteries, are widely used for supplying electric energy to an automobile, e.g., an electric vehicle, a hybrid electric vehicle, an electric motorcycle and scooter, an electric bicycle, a battery-electric locomotive, an electric rail trolley, an electric wheelchair, a golf cart, etc. When the lead-acid batteries are charged or discharged at a high current level, the temperature at the electrodes becomes high, which may cause the generation of acid gas. Therefore, a gas valve is disposed on the lead-acid batteries for safety concerns. The gas valve is automatically opened to release the extra acid gas when the internal gas pressure of the battery cells exceeds a normal range. In addition to the acid gas, the charging and discharging operations cause hydrogen and oxygen gases to be generated at the cathode and anode of the lead-acid battery cells. The hydrogen and oxygen gases may be also released from the gas valve when the internal gas pressure becomes too high.

However, the above-mentioned factors may result in reduction of the electrolyte solution in the lead-acid battery cells, thereby impacting the battery performance. Especially, when the battery is used in high-altitude regions, such as plateau regions, where the atmospheric pressure is low, the battery performance degrades significantly due to the higher internal and external pressure difference.

Accordingly, there exists a need for an improved solution for regulating battery operation to solve the above-mentioned problems.

BRIEF DESCRIPTION OF THE DRAWINGS

The embodiments will be more readily understood in view of the following description when accompanied by the below figures and wherein like reference numerals represent like elements, wherein:

FIG. 1 is a block diagram illustrating an example of a system for regulating battery operation, in accordance with one embodiment of the present disclosure;

FIG. 2 is a block diagram illustrating an example of a battery monitoring module and battery controlling module of the system for regulating battery operation shown in FIG. 1, in accordance with one embodiment of the present disclosure;

FIG. 3 is a flow chart illustrating an example of a method for regulating battery operation, in accordance with one embodiment of the present disclosure;

FIG. 4 is a block diagram illustrating an example of data flow in the system for regulating battery operation shown in FIG. 1, in accordance with one embodiment of the present disclosure;

FIG. 5 is a block diagram illustrating another example of data flow in the system for regulating battery operation shown in FIG. 1, in accordance with one embodiment of the present disclosure;

FIG. 6 is a flow chart illustrating another example of a method for regulating battery operation, in accordance with one embodiment of the present disclosure; and

FIG. 7 illustrates an example of an electric vehicle or a hybrid electric vehicle having a system for regulating battery operation, in accordance with one embodiment of the present disclosure.

SUMMARY

The present disclosure describes methods, systems, and programming for regulating battery operation.

In one example, a method for regulating battery operation is provided. A signal indicative of an atmospheric pressure outside a battery is first obtained. Based on the obtained signal, one or more parameters to be used for controlling an operation of the battery are then determined. Eventually, the operation of the battery is adjusted based on the determined one or more parameters.

Further, in said method, the operation of the battery may include charging of the battery. Further, in said method, the operation of the battery may include discharging of the battery. Further, in said method, the step of obtaining a signal may comprise the steps of receiving a navigation message from a navigation device; and extracting information about an altitude of the battery from the received navigation message. In addition, the navigation device may correspond to a navigation satellite.

Further, in said method, the step of obtaining a signal may comprise the step of obtaining information about the atmospheric pressure outside the battery from a barometer. Further, in said method, the step of determining one or more parameters may comprise the steps of comparing the extracted altitude with a threshold altitude; and when the extracted altitude is above the threshold altitude, determining a first parameter for adjusting a first aspect of the operation of the battery based on a difference between the extracted altitude and the threshold altitude. In addition, the first aspect of the operation may correspond to a level of current for charging the battery; and the first parameter corresponds to a certain change in the level of charging current. In addition, the first aspect of the operation may correspond to a length of time for charging the battery; and the first parameter corresponds to a certain change in the length of charging time. In addition, the step of determining one or more parameters may comprise the step of determining a second parameter for adjusting a second aspect of the operation of the battery based on the difference between the extracted altitude and the threshold altitude. In addition, the second aspect of the operation may correspond to a level of current for discharging the battery; and the second parameter may correspond to a certain change in the level of discharging current. In addition, the second aspect of the operation may correspond to a length of time for discharging the battery; and the second parameter corresponds to a certain change in the length of discharging time. In addition, the first parameter and the second parameter may change differently with respect to the difference between the extracted altitude and the threshold altitude.

In another example, a system for regulating battery operation is provided. The system includes a battery monitoring module and a battery controlling module. The battery monitoring module is configured to obtain a signal indicative of an atmospheric pressure outside a battery. The battery monitoring module is also configured to determine one or more parameters to be used for controlling an operation of the battery based on the obtained signal. The battery controlling module is configured to adjust the operation of the battery based on the determined one or more parameters. Further, in said system, the operation of the battery may include charging of the battery. Further, in said system, the operation of the battery may include discharging of the battery. Further, in said system, the battery monitoring module may comprise an altitude/atmospheric pressure retrieving unit configured to receive a navigation message from a navigation device; and extract information about an altitude of the battery from the received navigation message. In addition, the navigation device may correspond to a navigation satellite.

Further, in said system, the battery monitoring module may comprise an altitude/atmospheric pressure retrieving unit configured to receive information about the atmospheric pressure outside the battery from a barometer.

Further, in said system, the battery monitoring module may comprise decision logic configured to compare the extracted altitude with a threshold altitude; and when the extracted altitude is above the threshold altitude, determine a first parameter for adjusting a first aspect of the operation of the battery based on a difference between the extracted altitude and the threshold altitude. In addition, the first aspect of the operation may correspond to a level of current for charging the battery; and the first parameter may correspond to a certain change in the level of charging current. In addition, the first aspect of the operation may correspond to a length of time for charging the battery; and the first parameter may correspond to a certain change in the length of charging time. In addition, the decision logic may be further configured to determine a second parameter for adjusting a second aspect of the operation of the battery based on the difference between the extracted altitude and the threshold altitude. In addition, the second aspect of the operation may correspond to a level of current for discharging the battery; and the second parameter corresponds to a certain change in the level of discharging current. In addition, the second aspect of the operation may correspond to a length of time for discharging the battery; and the second parameter may correspond to a certain change in the length of discharging time. In addition, the first parameter and the second parameter may change differently with respect to the difference between the extracted altitude and the threshold altitude.

In still another example, an apparatus including a navigation receiver, a battery management system, a battery, and an engine is provided. The navigation receiver is configured to receive a navigation message from a navigation satellite. The battery management system is operatively coupled to the navigation receiver through a bus and comprising a processor. The processor is configured to obtain the navigation message indicative of an atmospheric pressure outside a battery and determine one or more parameters to be used for controlling an operation of the battery based on the atmospheric pressure. The processor is also configured to adjust the operation of the battery based on the determined one or more parameters. The battery is operatively coupled to the battery management system and controlled by the battery management system. The engine is operatively coupled to the battery and is configured to drive the apparatus using power provided by the battery.

Further, in said apparatus, the processor may further be configured to: receive a navigation message from the navigation satellite; and extract information about an altitude of the battery from the received navigation message. Further, in said apparatus, the processor may further be configured to: compare the extracted altitude with a threshold altitude; and when the extracted altitude is above the threshold altitude, determine a first parameter for regulating charging of the battery based on a difference between the extracted altitude and the threshold altitude. In addition, the processor may be further configured to determine a second parameter for regulating discharging of the battery based on the difference between the extracted altitude and the threshold altitude.

Other concepts relate to software for regulating battery operation. A software product, in accord with this concept, includes at least one machine-readable non-transitory medium and information carried by the medium. The information carried by the medium may be executable program code data regarding parameters in association with a request or operational parameters, such as information related to a user, a request, or a social group, etc.

In yet another example, a machine readable and non-transitory medium having information recorded thereon for regulating battery operation, wherein the information, when read by the machine, causes the machine to perform a series of steps. A signal indicative of an atmospheric pressure outside a battery is first obtained. Based on the obtained signal, one or more parameters to be used for controlling an operation of the battery are then determined. Eventually, the operation of the battery is adjusted based on the determined one or more parameters.

DETAILED DESCRIPTION

Reference will now be made in detail to the embodiments of the present disclosure, examples of which are illustrated in the accompanying drawings. While the present disclosure will be described in conjunction with the embodiments, it will be understood that they are not intended to limit the present disclosure to these embodiments. On the contrary, the present disclosure is intended to cover alternatives, modifications, and equivalents, which may be included within the spirit and scope of the present disclosure as defined by the appended claims.

Furthermore, in the following detailed description of embodiments of the present disclosure, numerous specific details are set forth in order to provide a thorough understanding of the present disclosure. However, it will be recognized by one of ordinary skill in the art that the present disclosure may be practiced without these specific details. In other instances, well-known methods, procedures, components, and circuits have not been described in detail as not to unnecessarily obscure aspects of the embodiments of the present disclosure.

Embodiments in accordance with the present disclosure provide a method and system for regulating battery operation, such as charging and/or discharging of the battery, by taking the atmospheric pressure outside the battery into consideration. The charging and/or discharging schemes are optimized in view of the atmospheric pressure change, due to, for example, altitude change, thereby promoting battery performance and prolonging battery life. Moreover, in one example, the atmospheric pressure, represented by altitude information, may be easily obtained from a navigation receiver, such as a global positioning system (GPS) receiver or a Compass receiver, installed on an electric vehicle and seamlessly provided to the battery management system (BMS) in the electric vehicle through the existing CAN bus to optimize the battery charging and/or discharging schemes without adding additional hardware components.

Additional advantages and novel features will be set forth in part in the description which follows, and in part will become apparent to those skilled in the art upon examination of the following and the accompanying drawings or may be learned by production or operation of the examples.

FIG. 1 illustrates one example of a system 100 for regulating battery operation, in accordance with one embodiment of the present disclosure. The system 100 may include a battery management system 102, a battery or battery pack 104 including one or more battery cells 104-1, 104-2, 104-3, ... 104-4, and an altitude/atmospheric (ATM) pressure information source 106. The system 100 may be, for example, an automobile, e.g., an electric vehicle, a hybrid electric vehicle, an electric motorcycle and scooter, an electric bicycle, a battery-electric locomotive, an electric rail trolley, an electric wheelchair, or a golf cart, a backup power supply, e.g., an uninterruptible power supply (UPS), or any other suitable system, which utilizes rechargeable batteries to provide full or partial power supply. The battery 104 may be any suitable rechargeable battery or battery pack, such as but not limited to, lead-acid batteries.

The battery management system 102 in this example includes at least one processor 108, storage 110, memory 112, and one or more sensors 114, which are connected to each other through an internal bus 116. The battery management system 102 in this example is configured to manage the battery 104 by, for example, monitoring its state, such as temperature, voltage, state of charge, state of health, coolant flow or current, through sensors 114 or any suitable sensing mechanisms. Based on the monitored battery condition, the battery management system 102 is also configured to calculate control parameters and control the operations of the battery 104, such as charging and discharging processes, based on the control parameters. In this example, the battery management system 102 may be further configured to balance battery cells through corresponding balancing circuits 118-1, 118-2, 118-3, ... 118-4 and protect the battery 104 by preventing it from operating outside its safe operation area. The processor 108 in the battery management system 102 may be any suitable processing unit, such as but not limited to, a microprocessor, a microcontroller, a central processing unit, an electronic control unit, etc. The memory 112 may be, for example, a discrete memory or a unified memory integrated with the processor 108. The battery management system 102 may further include any other suitable component as known in the art.

The altitude/atmospheric pressure information source 106 in this example may be any suitable device that provides information about the current altitude and/or atmospheric pressure outside the battery 104, for example, a GPS or Compass receiver or a barometer. The altitude/atmospheric pressure information source 106 in this example is operatively coupled to the battery management system 102 through a bus, such as a CAN bus or a UART bus, or a direct connection. The information about the altitude and/or atmospheric pressure may be sent from the altitude/atmospheric pressure information source 106 to the battery management system 102 for regulating the operation of the battery 104.

FIG. 2 illustrates one example of a battery monitoring module 202 and battery controlling module 204 of the system 100 for regulating battery operation, in accordance with one embodiment of the present disclosure. "Module," "unit," and "logic" referred to herein are any suitable executing software module, hardware, executing firmware or any suitable combination thereof that can perform the desired function, such as programmed processors, discrete logic, for example, state machine, to name a few. It is understood that the battery monitoring module 202 and battery controlling module 204 may be included in the processor 108 as part of the processor 108, or a discrete component of the system 100 that can be executed by the processor 108, such as software programs in the storage 110 that can be loaded into the memory 112 and executed by the processor 108.

The battery monitoring module 202 in this example includes an altitude/atmospheric pressure retrieving unit 206, decision logic 208, and a pressure-based battery optimization model 210. The altitude/atmospheric pressure retrieving unit 206 is configured to obtain a signal indicative of the atmospheric pressure outside the battery 104. In this example, the signal may be transmitted to the altitude/atmospheric pressure retrieving unit 206 through a bus 212, such as a CAN bus or UART bus. In one embodiment, the signal may include a navigation message received by a GPS or Compass receiver, which includes information about the current altitude, for example, as part of the standard National Marine Electronics Association (NMEA) code. The altitude/atmospheric pressure retrieving unit 206 may be responsible for extracting the altitude information from the navigation message per the standard NMEA code format. It is known that the atmospheric pressure can be calculated at a given altitude by the following Equation (1):

$$p = 101325 \times (1\text{-}2.25577 \times 10^{-5} h)^{5.25588} \quad (1)$$

where *p* is the atmospheric pressure (Pa) and *h* is the altitude above the sea level (m). In one example, the altitude/atmospheric pressure retrieving unit 206 may be responsible for converting the altitude extracted from the navigation message to the atmospheric pressure using Equation (1). In another example, the altitude may be directed applied by the decision logic 208 and the pressure-based battery optimization model 210 without being converted to the atmospheric pressure. In another embodiment, the signal may be an output from a barometer having information about the current atmospheric pressure outside the battery 104. In this situation, the altitude/atmospheric pressure retrieving unit 206 may extract the value of the current atmospheric pressure and forward it to the decision logic 208.

The decision logic 208 in this example is configured to determine one or more parameters to be used for controlling the operation of the battery 104 based on the obtained signal using the pressure-based battery optimization model 210. The pressure-based battery optimization model 210 may include any predefined algorithms, schemes, parameters, variables, and constants for optimizing the battery operation based on the obtained altitude or atmospheric pressure outside the battery 104. For example, the pressure-based battery optimization model 210 may include one or more threshold values of atmospheric pressure or altitude to be compared with the actual atmospheric pressure or altitude in order to determine whether the battery operation needs to be adjusted to compensate for the influence of the air pressure change. The pressure-based battery optimization model 210 may also include which aspect(s) of the battery operation need to be adjusted and how the adjustments can be done. In this example, the first aspect of the operation may be the charging of the battery 104, which may be adjusted by changing the level of charging current or the length of charging time; the second aspect may be the discharging of the battery 104, which may be adjusted by changing the level of discharging current or the length of discharging time. Using the predefined pressure-based battery optimization model 210, the decision logic 208 is responsible for determining the control parameters for optimizing the battery operation based on the obtained actual atmospheric pressure or altitude.

The battery controlling module 204 in this example is configured to adjust the operation of the battery 104 based on the determined control parameters from the battery monitoring module 202. In this example, the battery controlling module 204 may include a charging controller 214 and discharging controller 216 for adjusting the charging and discharging processes of the battery 104, respectively. The decision logic 208 may provide a control parameter corresponding to a certain change in the level of charging current or a control parameter corresponding to a certain change in the length of charging time to the charging controller 214. Similarly, the decision logic 208 may provide a control parameter corresponding to a certain change in the level of discharging current or a control parameter corresponding to a certain change in the length of discharging time to the discharging controller 216. The charging controller 214 and discharging controller 216 then may be responsible for providing instructions to cause the desired changes in battery operation based on the control parameters. It is understood that any other suitable aspect of battery operation may be controlled and adjusted by the battery controlling module 204 based on the current outside atmospheric pressure to optimize the battery performance and prolong battery life.

FIG. 3 depicts one example of a method for regulating battery operation, in accordance with one embodiment of the present disclosure. It will be described with reference to the above figures. However, any suitable module or unit may be employed. Beginning at block 302, a signal indicative of an atmospheric pressure outside a battery is obtained. The signal may be a GPS signal having altitude information in a navigation message or an output signal from a barometer having atmospheric pressure information. Proceeding to block 304, one or more parameters to be used for controlling an operation of the battery are determined based on the obtained signal. The operation of the battery includes, for example, the charging and discharging of the battery. As described above, blocks 302, 304 may be performed by the battery monitoring module 202 of the battery management system 102. At block 306, the operation of the battery is adjusted based on the determined one or more parameters. As described above, this may be performed by the battery controlling module 204 of the battery management system 102.

FIG. 4 illustrates one example of data flow in the system 100 for regulating battery operation, in accordance with one embodiment of the present disclosure. In this example, GPS NEMA code 402, as part of a standard GPS navigation message, includes a GGA sentence which provides the current Fix data including 3D location and accuracy data. One exemplary GGA sentence is illustrated below:

$GPGGA, 123519,4807.038,N,01131.000,E,1,08,0.9,545.4,M,46.9,M,,*47,

where "545.4,M" is the altitude information, which indicate that the current altitude is 545.5 meters above mean sea level. As described above, the altitude/atmospheric pressure retrieving unit 206 may extract the actual altitude 404 from the received GPS NEMA code 402. The pressure-based battery optimization model 210 may include a predetermined threshold altitude 406, which is compared with the actual altitude 404 by the decision logic 208. In one example, the threshold altitude is about 1000 meters. When the actual altitude 404 is no more than the threshold altitude 406, the decision logic 208 may assume that the air pressure change caused by the altitude increase may be neglected per the pressure-based battery optimization model 210 and thus, does not output control parameters 408 to adjust the battery operation. When the actual altitude 404 is above the threshold altitude 406, the decision logic 208 starts to regulate the battery operation by providing control parameters 408 in accordance with the regulation scheme in the pressure-based battery optimization model 210. In one example, the difference between the actual altitude 404 and the threshold altitude 406 may be calculated by the decision logic 208 and used as a basis for determining the proper control parameters 408. In another example, multiple threshold altitudes 406 may be applied by the decision logic 208. For example, the threshold altitudes 406 may include 1000 meters, 2000 meters, 3000 meters, etc. The control parameters 408 change every time the actual altitude 404 exceeds the next level of threshold altitude 406, but remain substantially the same between two subsequent threshold altitude levels. Any other control and optimization scheme based on the actual altitude 404 and threshold altitude 406 may be predefined in the pressure-based battery optimization model 210 and applied by the decision logic 208 for generating the control parameters 408.

FIG. 5 illustrates another example of data flow in the system 100 for regulating battery operation, in accordance with one embodiment of the present disclosure. In this example, a barometer 502 measures the actual atmospheric pressure 504 outside a battery and output the actual atmospheric pressure 504 to the decision logic 208. The pressure-based battery optimization model 210 may include a predetermined threshold atmospheric pressure 506, which is compared with the actual atmospheric pressure 504 by the decision logic 208. Similar to the embodiment described above with respect to FIG. 4, various control and optimization schemes based on the actual atmospheric pressure 504 and threshold atmospheric pressure 506 may be predefined in the pressure-based battery optimization model 210 and applied by the decision logic 208 for generating the control parameters 508.

FIG. 6 depicts another example of a method for regulating battery operation, in accordance with one embodiment of the present disclosure. It will be described with reference to the above figures. However, any suitable module or unit may be employed. In operation, beginning at block 602, a navigation message is received from a navigation device, such as a navigation satellite, by a navigation receiver. Proceeding to block 604, altitude information of the battery is extracted from the received navigation message. As described above, this may be performed by the altitude/atmospheric pressure retrieving unit 206 of the battery management system 102. At block 606, the actual altitude in the altitude information is compared with a predefined threshold altitude to determine whether the actual altitude is larger than the threshold altitude. If the actual altitude is equal to or less than the threshold altitude, processing may return to block 602. Once the actual altitude exceeds the threshold altitude, at block 608, the difference between the actual altitude and threshold altitude is calculated. As described above, blocks 606, 608 may be performed by the decision logic 208 in conjunction with the pressure-based battery optimization model 210 of the battery management system 102.

Moving to block 610, a first parameter for adjusting the charging process of the battery is determined based on the difference between the extracted altitude and the threshold altitude. The first parameter may correspond to a certain change in the level of charging current or a certain change in the length of charging time. For example, once the actual altitude is more than 1000 meters, a 5% reduction in charging current level or charging time length is applied as the first control parameter for adjusting the charging process to compensate for the air pressure change caused by the altitude increase. In one embodiment, the reduction in the charging current level or the charging time length is linearly increased with respect to the difference between the extracted altitude and the threshold altitude. In another embodiment, the reduction changes discretely. For example, the same amount of reduction, e.g., 5%, in charging current level or charging time length is maintained when the actual altitude is between 1000 and 2000 meters, and the reduction increases to 10% when the actual altitude is over the 2000-meter threshold. As described above, this may be performed by the decision logic 208 in conjunction with the pressure-based battery optimization model 210 of the battery management system 102. At block 612, the charging current level or the charging time length is adjusted based on the determined first parameter. As described above, this may be performed by the charging controller 214 of the battery management system 102.

Meanwhile, at block 614, a second parameter for adjusting the discharging process of the battery is determined based on the difference between the extracted altitude and the threshold altitude. The second parameter may correspond to a certain change in the level of discharging current or a certain change in the length of discharging time. For example, once the actual altitude is more than 1000 meters, a 5% reduction in discharging current level or discharging time length is applied as the second control parameter for adjusting the discharging process to compensate for the air pressure change caused by the altitude increase. It is understood that because the discharging current is utilized for providing electric power, a relatively stable discharging current may be necessary for a device driven by the battery to work properly. Thus, the first parameter and the second parameter may change differently with respect to the difference between the extracted altitude and the threshold altitude. For example, the discharging current may decrease less drastically compared with the charging current at the same altitude level. As described above, this may be performed by the decision logic 208 in conjunction with the pressure-based battery optimization model 210 of the battery management system 102. At block 616, the discharging current level or the discharging time length is adjusted based on the determined second parameter. As described above, this may be performed by the discharging controller 216 of the battery management system 102.

FIG. 7 illustrates one example of an electric vehicle or a hybrid electric vehicle 700 having a system for regulating battery operation, in accordance with one embodiment of the present disclosure. The electric vehicle 700 in this example includes a navigation receiver 702, a battery management system 704, a battery 706, and an engine 708, which are operatively coupled to each other through a CAN bus 710. The navigation receiver 702, such as a preinstalled car navigation system or a portable GPS/Compass receiver, is configured to receive a navigation message from a navigation satellite 712, e.g., a GPS satellite or Compass satellite, and transmit the navigation message to the battery management system 704 through the CAN bus. The battery management system 704 may include the battery monitoring module 202 and battery controlling module 204 described above with respect to FIG. 2. As discussed above, control parameters may be determined by the battery management system 704 based on the altitude information in the navigation message and applied by the battery management system 704 to adjust various aspects of the operation of the battery 706. The battery 706 may be, for example, a lead-acid battery pack having multiple battery cells. The battery 706 provides electric power to the engine 708, which further converts the electric power to motion energy for driving the electric vehicle 700.

Aspects of the method for regulating battery operation, as outlined above, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another. Thus, another type of media that may bear the software elements includes optical, electrical, and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

Hence, a machine readable medium may take many forms, including but not limited to, a tangible storage medium, a carrier wave medium or physical transmission medium. Non-volatile storage media include, for example, optical or magnetic disks, such as any of the storage devices in any computer(s) or the like, which may be used to implement the system or any of its components as shown in the drawings. Volatile storage media include dynamic memory, such as a main memory of such a computer platform. Tangible transmission media include coaxial cables; copper wire and fiber optics, including the wires that form a bus within a computer system. Carrier-wave transmission media can take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer can read programming code and/or data. Many of these forms of computer readable media may be involved in carrying one or more sequences of one or more instructions to a processor for execution.

Those skilled in the art will recognize that the present disclosure is amenable to a variety of modifications and/or enhancements. For example, although the implementation of various components described above may be embodied in a hardware device, it can also be implemented as a software only solution - e.g., an installation on an existing server. In addition, the "module," "unit," or ""logic" as disclosed herein can be implemented as a firmware, firmware/software combination, firmware/hardware combination, or a hardware/firmware/so ftware combination.

While the foregoing description and drawings represent embodiments of the present disclosure, it will be understood that various additions, modifications, and substitutions may be made therein without departing from the spirit and scope of the principles of the present disclosure as defined in the accompanying claims. One skilled in the art will appreciate that the present disclosure may be used with many modifications of form, structure, arrangement, proportions, materials, elements, and components and otherwise, used in the practice of the disclosure, which are particularly adapted to specific environments and operative requirements without departing from the principles of the present disclosure. The presently disclosed embodiments are therefore to be considered in all respects as illustrative and not restrictive, the scope of the present disclosure being indicated by the appended claims and their legal equivalents, and not limited to the foregoing description.

## Claims

**1.** A method for regulating battery operation, comprising the steps of:

obtaining a signal indicative of an atmospheric pressure outside a battery;
determining one or more parameters to be used for controlling an operation of the battery based on the obtained signal; and
adjusting the operation of the battery based on the determined one or more parameters.

**2.** The method of claim 1, wherein the step of obtaining a signal comprises the steps of:

receiving a navigation message from a navigation device; and
extracting information about an altitude of the battery from the received navigation message.

**3.** The method of claim 1 or 2, wherein the step of determining one or more parameters comprises the steps of:

comparing the extracted altitude with a threshold altitude; and
when the extracted altitude is above the threshold altitude, determining a first parameter for adjusting a first aspect of the operation of the battery based on a difference between the extracted altitude and the threshold altitude.

**4.** The method of claim 3, wherein
the first aspect of the operation corresponds to a level of current for charging the battery; and
the first parameter corresponds to a certain change in the level of charging current.

**5.** The method of claim 3, wherein
the first aspect of the operation corresponds to a length of time for charging the battery; and
the first parameter corresponds to a certain change in the length of charging time.

**6.** The method of claim 3, 4 or 5, wherein the step of determining one or more parameters comprises the step of determining a second parameter for adjusting a second aspect of the operation of the battery based on the difference between the extracted altitude and the threshold altitude.

**7.** The method of claim 6, wherein
the second aspect of the operation corresponds to a level of current for discharging the battery; and
the second parameter corresponds to a certain change in the level of discharging current.

**8.** The method of claim 6, wherein
the second aspect of the operation corresponds to a length of time for discharging the battery; and
the second parameter corresponds to a certain change in the length of discharging time.

**9.** The method of claim 6, 7, or 8, wherein the first parameter and the second parameter change differently with respect to the difference between the extracted altitude and the threshold altitude.

**10.** A system for regulating battery operation, comprising:

a battery monitoring module configured to:

obtain a signal indicative of an atmospheric pressure outside a battery, and
determine one or more parameters to be used for controlling an operation of the battery based on the obtained signal; and

a battery controlling module configured to adjust the operation of the battery based on the determined one or more parameters.

**11.** The system of claim 10, wherein the battery monitoring module comprises an altitude/atmospheric pressure retrieving unit configured to:

receive a navigation message from a navigation device; and
extract information about an altitude of the battery from the received navigation message.

**12.** The system of claim 10 or 11, wherein the battery monitoring module comprises decision logic configured to:

compare the extracted altitude with a threshold altitude; and
when the extracted altitude is above the threshold altitude, determine a first parameter for adjusting a first aspect of the operation of the battery based on a difference between the extracted altitude and the threshold altitude.

**13.** The system of claim 12, wherein
the first aspect of the operation corresponds to a level of current for charging the battery; and
the first parameter corresponds to a certain change in the level of charging current.

**14.** The system of claim 12, wherein
the first aspect of the operation corresponds to a length of time for charging the battery; and
the first parameter corresponds to a certain change in the length of charging time.

**15.** The system of claims 12, 13 or 14, wherein the decision logic is further configured to determine a second parameter for adjusting a second aspect of the operation of the battery based on the difference between the extracted altitude and the threshold altitude.

**16.** The system of claim 15, wherein
the second aspect of the operation corresponds to a level of current for discharging the battery; and
the second parameter corresponds to a certain change in the level of discharging current.

**17.** The system of claim 15, wherein
the second aspect of the operation corresponds to a length of time for discharging the battery; and
the second parameter corresponds to a certain change in the length of discharging time.

**18.** The system of claim 15, 16 or 17, wherein the first parameter and the second parameter change differently with respect to the difference between the extracted altitude and the threshold altitude.

**19.** An apparatus comprising:

a navigation receiver configured to receive a navigation message from a navigation satellite;
a system according to one of claims 10 to 18 operatively coupled to the navigation receiver through a bus;
a battery operatively coupled to the system and controlled by the system; and

an engine operatively coupled to the battery and configured to drive the apparatus using power provided by the battery.

**20.** A machine-readable tangible and non-transitory medium having information for regulating battery operation recorded thereon, wherein the information, when read by the machine, causes the machine to perform the following:

obtaining a signal indicative of an atmospheric pressure outside a battery;
determining one or more parameters to be used for controlling an operation of the battery based on the obtained signal; and
adjusting the operation of the battery based on the determined one or more parameters.

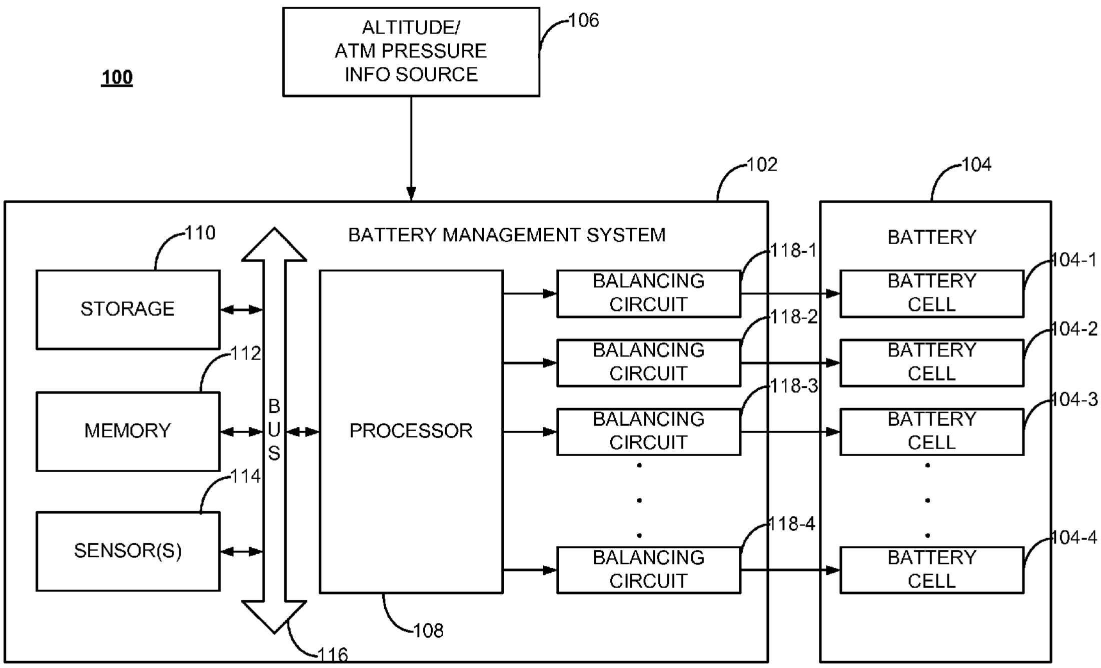
100
ALTITUDE/
ATM PRESSURE
INFO SOURCE
106
102
104
BATTERY MANAGEMENT SYSTEM
110
STORAGE
112
MEMORY
114
SENSOR(S)
BUS
PROCESSOR
108
116
BALANCING CIRCUIT
118-1
BALANCING CIRCUIT
118-2
BALANCING CIRCUIT
118-3
BALANCING CIRCUIT
118-4
BATTERY
BATTERY CELL
104-1
BATTERY CELL
104-2
BATTERY CELL
104-3
BATTERY CELL
104-4

FIG. 1

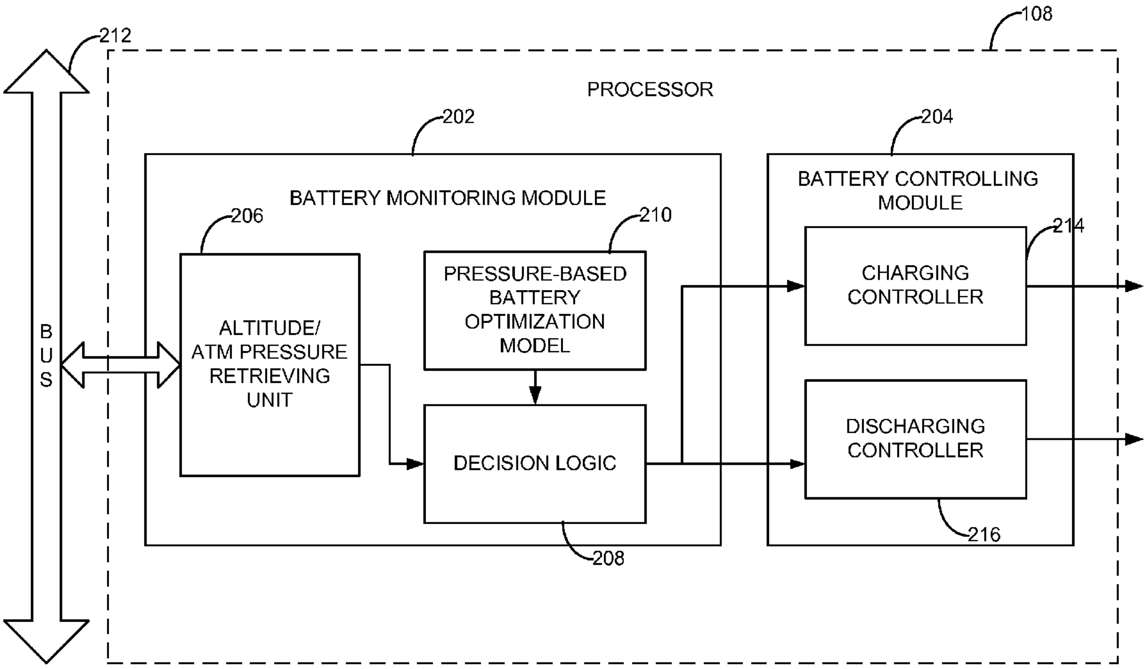
212
108
PROCESSOR
202
204
BATTERY MONITORING MODULE
BATTERY CONTROLLING MODULE
206
210
214
B U S
ALTITUDE/ ATM PRESSURE RETRIEVING UNIT
PRESSURE-BASED BATTERY OPTIMIZATION MODEL
DECISION LOGIC
CHARGING CONTROLLER
DISCHARGING CONTROLLER
208
216

FIG. 2

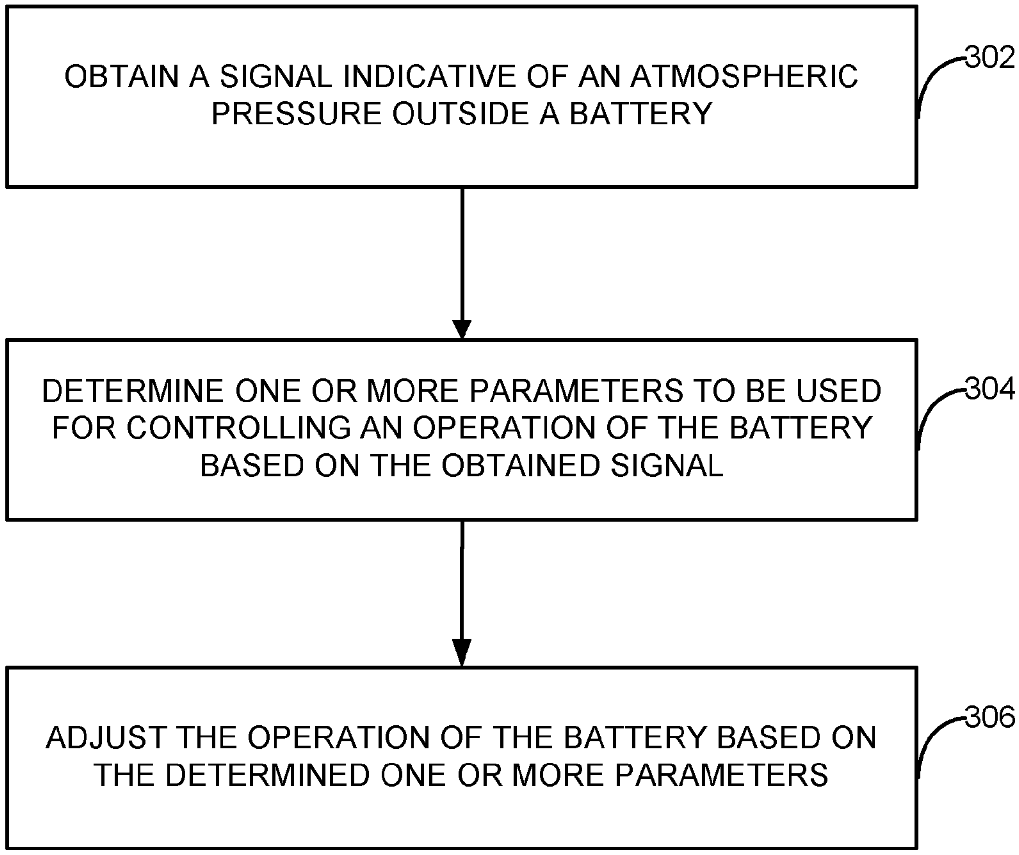
OBTAIN A SIGNAL INDICATIVE OF AN ATMOSPHERIC PRESSURE OUTSIDE A BATTERY
302
DETERMINE ONE OR MORE PARAMETERS TO BE USED FOR CONTROLLING AN OPERATION OF THE BATTERY BASED ON THE OBTAINED SIGNAL
304
ADJUST THE OPERATION OF THE BATTERY BASED ON THE DETERMINED ONE OR MORE PARAMETERS
306

FIG. 3

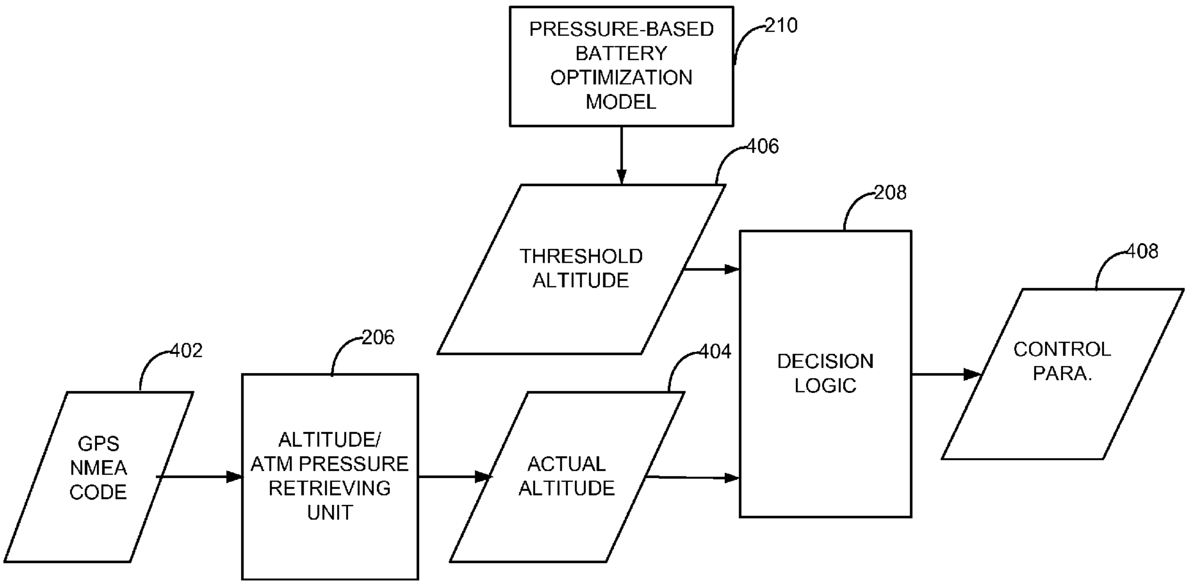
PRESSURE-BASED BATTERY OPTIMIZATION MODEL
210
THRESHOLD ALTITUDE
406
208
DECISION LOGIC
408
CONTROL PARA.
402
GPS NMEA CODE
206
ALTITUDE/ ATM PRESSURE RETRIEVING UNIT
404
ACTUAL ALTITUDE

FIG. 4

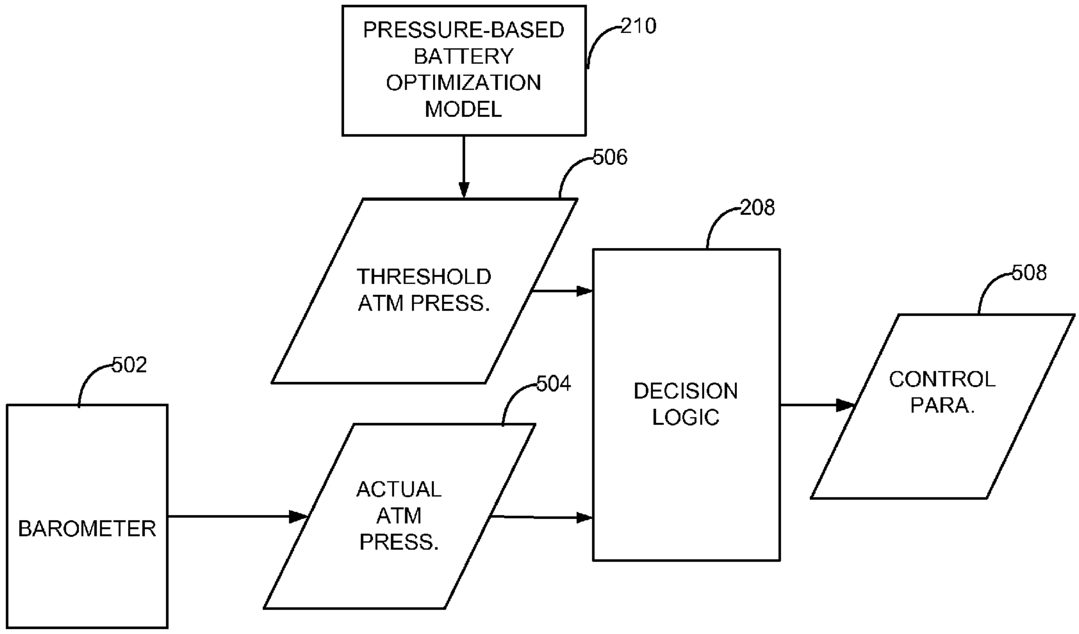
PRESSURE-BASED BATTERY OPTIMIZATION MODEL
210
506
THRESHOLD ATM PRESS.
208
DECISION LOGIC
508
CONTROL PARA.
502
BAROMETER
504
ACTUAL ATM PRESS.

FIG. 5

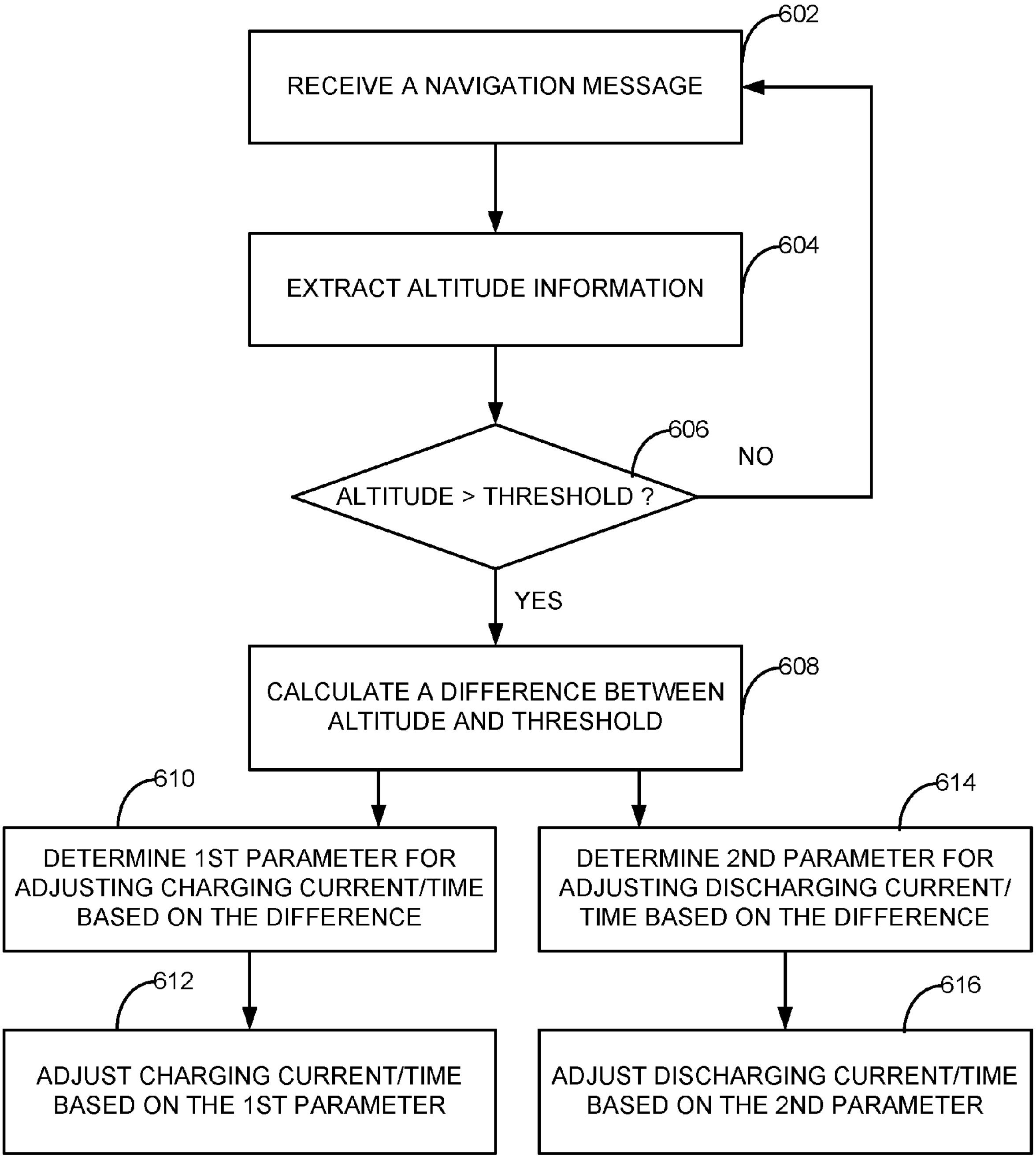
602
RECEIVE A NAVIGATION MESSAGE
604
EXTRACT ALTITUDE INFORMATION
606
NO
ALTITUDE > THRESHOLD ?
YES
608
CALCULATE A DIFFERENCE BETWEEN ALTITUDE AND THRESHOLD
610
614
DETERMINE 1ST PARAMETER FOR ADJUSTING CHARGING CURRENT/TIME BASED ON THE DIFFERENCE
DETERMINE 2ND PARAMETER FOR ADJUSTING DISCHARGING CURRENT/ TIME BASED ON THE DIFFERENCE
612
616
ADJUST CHARGING CURRENT/TIME BASED ON THE 1ST PARAMETER
ADJUST DISCHARGING CURRENT/TIME BASED ON THE 2ND PARAMETER

FIG. 6

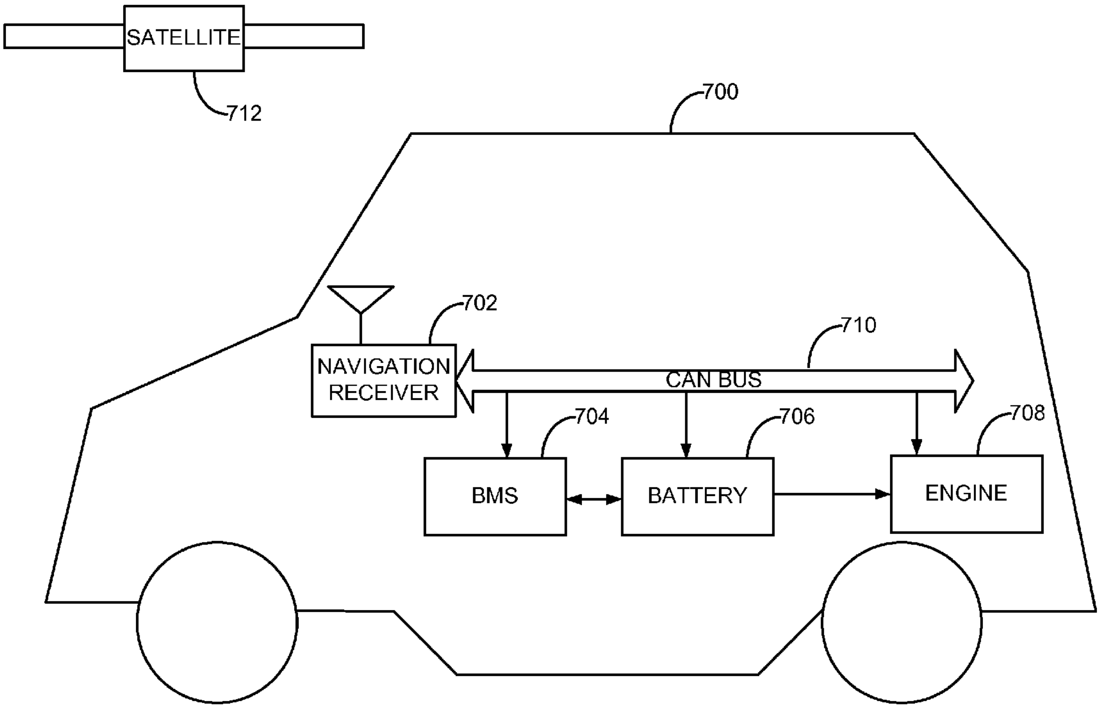
SATELLITE
712
700
702
710
NAVIGATION RECEIVER
CAN BUS
704
706
708
BMS
BATTERY
ENGINE

FIG. 7

Europäisches Patentamt
European Patent Office
Office européen des brevets

# EUROPEAN SEARCH REPORT

Application Number
EP 13 16 9136

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/030471 A1 (FAYE IAN [DE]) 12 February 2004 (2004-02-12) * paragraphs [0005] - [0014], [0018] - [0025]; claims 1-10; figures 1-3 * | 1-20 | INV. B60L11/18 H01M10/44 H01M10/48 |
| X | US 6 230 496 B1 (HOFMANN LEE GREGOR [US] ET AL) 15 May 2001 (2001-05-15) * page 5, lines 34-53; claims 1, 2, 17-20, 29-32; figures 1, 2 * * page 6, line 66 - page 9, line 27 * * page 12, lines 14-33 * | 1-20 | |
| X | US 6 166 449 A (TAKAOKA TOSHIFUMI [JP] ET AL) 26 December 2000 (2000-12-26) * page 9, line 45 - page 13, line 14 * * page 14, line 56 - page 15, line 20; figures 1, 3-5, 10, 11 * | 1-20 | |
| X | US 2008/147259 A1 (CHOI YONG KAK [KR]) 19 June 2008 (2008-06-19) * paragraphs [0024] - [0034]; figure 1 * | 1-20 | |

TECHNICAL FIELDS SEARCHED (IPC)
B60L
H01M
H02J

The present search report has been drawn up for all claims

| Place of search | Date of completion of the search | Examiner |
|---|---|---|
| Munich | 17 October 2013 | Mizera, Erich |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 16 9136

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2013

| Patent document cited in search report | Publication date | Patent family member(s) | Publication date |
|---|---|---|---|
| US 2004030471 A1 | 12-02-2004 | DE 10128758 A1 | 19-12-2002 |
| | | EP 1399329 A1 | 24-03-2004 |
| | | JP 2004521596 A | 15-07-2004 |
| | | US 2004030471 A1 | 12-02-2004 |
| | | WO 02100675 A1 | 19-12-2002 |
| US 6230496 B1 | 15-05-2001 | EP 1168567 A2 | 02-01-2002 |
| | | JP 2002084603 A | 22-03-2002 |
| | | JP 2012210934 A | 01-11-2012 |
| | | US 6230496 B1 | 15-05-2001 |
| US 6166449 A | 26-12-2000 | DE 69709002 D1 | 24-01-2002 |
| | | DE 69709002 T2 | 02-05-2002 |
| | | EP 0829389 A2 | 18-03-1998 |
| | | JP 3211699 B2 | 25-09-2001 |
| | | JP H10150701 A | 02-06-1998 |
| | | US 6166449 A | 26-12-2000 |
| US 2008147259 A1 | 19-06-2008 | JP 5022067 B2 | 12-09-2012 |
| | | JP 2008150014 A | 03-07-2008 |
| | | KR 20080055494 A | 19-06-2008 |
| | | US 2008147259 A1 | 19-06-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 201210223441